# EUROPÄISCHE PATENTSCHRIFT

(11) **EP 2 811 181 B1**
(45) Veröffentlichungstag und Bekanntmachung des Hinweises auf die Patenterteilung: **05.07.2017**
(21) Anmeldenummer: 14168304.5
(22) Anmeldetag: 14.05.2014
(51) Int. Cl.: F16B 25/00

(54) **Schraube**
Screw
Vis

(30) Priorität: 06.06.2013 DE 102013210566
(43) Veröffentlichungstag der Anmeldung: 10.12.2014
(73) Patentinhaber: SWG Schraubenwerk Gaisbach GmbH, 74638 Waldenburg (DE)
(72) Erfinder: Stiebitz, Günter, 74638 Waldenburg (DE); Roll, Patrick, 74523 Schwäbisch Hall (DE); Mugler, Manuel, 74653 Ingelfingen (DE)
(74) Vertreter: Patentanwälte Ruff, Wilhelm, Beier, Dauster & Partner mbB

(56) Entgegenhaltungen:
- WO-A1-2006/043169
- DE-A1- 2 157 373
- GB-A- 1 254 218
- US-A- 1 336 773
- US-A- 3 523 565

## Beschreibung

Die Erfindung betrifft eine Schraube mit einem Schraubenschaft, der sich von einem Schraubenantriebsende, das beispielsweise einen Schraubenkopf aufweist, zu einer Schraubenspitze erstreckt, und der ein Gewinde aufweist.

Bei den herkömmlichen Gewinden verlaufen üblicherweise beide Gewindeflanken in einem Längsschnitt durch die Schraube geradlinig. Die Seitenkontur des Schraubenkerns zwischen den Gewindeflanken ist in den meisten Fällen geradlinig und parallel zu der Längsachse der Schraube.

Es gibt symmetrische und unsymmetrische Gewinde. Bei den symmetrischen Gewinden ist der Winkel zwischen der dem Schraubenantriebsende zugewandten Gewindeflanke und der Längsachse der Schraube absolut genommen gleich groß wie der Winkel zwischen der Schraubenlängsachse und der gegenüberliegenden Gewindeflanke.

Bei unsymmetrischen Gewinden ist die dem Schraubenantriebsende zugewandte Gewindeflanke näher an einer Querebene zur Längsachse der Schraube als die gegenüberliegende Gewindeflanke.

Ebenfalls bekannt ist es, den Übergang zwischen der Gewindeflanke und dem Schaft mit einem sehr kleinen Radius abzurunden, um keine scharfe Kante entstehen zu lassen.

Weiterhin bekannt ist es, den Gewindegrund insgesamt abzurunden, wobei auch in diesen Fällen die Gewindeflanke über ihren größten Teil im Längsschnitt durch die Schraube geradlinig verläuft.

Es ist bereits eine gewindeformende Schraube zur Verwendung in weichem Material bekannt, bei der die dem Schraubenantriebsende abgewandte Gewindeflanke teilweise konkav ausgebildet ist und abgerundet in die gegenüberliegende Gewindeflanke übergeht (US 2009/0047095 A1).

Es ist bereits eine Schraube für Holz bekannt, bei der die dem Schraubenantriebsende zugewandte Flanke des Gewindes konvex und die gegenüberliegende Flanke des Gewindes konkav gekrümmt ist. Diese Schraube hat mindestens über die Hälfte der Länge des Schraubenschafts einen von der Spitze ausgehenden konischen Verlauf (US 1,336,773). Die Gewindehöhe nimmt dabei in Richtung auf die Schraubenspitze zu.

Der Erfindung liegt die Aufgabe zu Grunde, eine Schraube mit einer höheren Gewindestabilität und einem verringerten Einschraubmoment zu schaffen. Es soll sich dabei um eine Spanplattenschraube oder eine Schraube handeln, die auch in Kunststoff, Metall, Vollholz und anderen Materialien verwendet werden kann.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Gewindeflanken verlaufen im Schnitt erfindungsgemäß gebogen bzw. gekrümmt, und zwar die dem Schraubenantriebsende zugewandte Gewindeflanke konvex gekrümmt, und die gegenüberliegende dem vorderen Schraubenende zugewandte Gewindeflanke konkav gekrümmt.

In Weiterbildung der Erfindung ist vorgesehen, dass die dem Schraubenantriebsende zugewandte Gewindeflanke beim Übergang in den Schraubenschaft im Wesentlichen rechtwinklig in diesen übergeht, allenfalls geringfügig oberhalb eines rechten Winkels, um das Herstellen des Gewindes mithilfe von Walzbacken zu ermöglichen.

In weiterer Ausgestaltung der Erfindung kann vorgesehen sein, dass die dem vorderen Schraubenende zugewandte Gewindeflanke schräg in den Schraubenschaft übergeht, so dass der Winkel zwischen der Gewindeflanke und der Außenkontur des Gewindeschafts einen stumpfen Winkel bildet, der beispielsweise in einem Bereich von 130 bis 160 Winkelgraden liegt.

Die beiden Gewindeflanken treffen sich in der Gewindekante, wobei an Stelle einer scharfen Gewindekante eine Abplattungsfläche vorgesehen sein kann, wobei die Tangenten an die jeweilige Gewindeflanke dann einen spitzen Winkel bilden, der beispielsweise im Bereich von 20 bis 30 Winkelgrad liegt, vorzugsweise bei einem Winkel von etwa 25 Winkelgrad.

Die Wölbung der Gewindeflanken kann einer beliebigen Kurve entsprechen. Es hat sich jedoch als besonders vorteilhaft herausgestellt, wenn die Wölbung der dem Schraubenantriebsende zugewandten Gewindeflanke und/oder die Wölbung der dem vorderen Schraubenende zugewandten Gewindeflanke einem Kreisbogen entspricht, also einer Krümmung mit einem konstanten Radius. Alternativ verlaufen die Gewindeflanken entlang einer Parabel, allgemein entlang einer Kurve oder entlang einer Aneinanderreihung gerader Strecken, die in eine Wölbung eingepasst sind.

In weiterer Ausgestaltung der Erfindung liegt der Krümmungsradius der konkav gebogenen Gewindeflanke in einem Bereich zwischen 30% und 50%, insbesondere 36% und 46%, des Kerndurchmessers der Schraube.

Es ist ebenfalls möglich, dass dieser Krümmungsradius der konkaven Gewindeflanke in einem Bereich zwischen 20% und 30%, insbesondere 23% und 28%, des Außendurchmessers des Gewindes der Schraube liegt.

Erfindungsgemäß kann vorgesehen sein, dass der Krümmungsradius der konvex gekrümmten Gewindeflanke in einem Bereich zwischen 90% und 170%, insbesondere 130% und 165% oder 90% und 95%, des Kerndurchmessers der Schraube.

Es kann nach einem weiteren Merkmal der Erfindung vorgesehen sein, dass der Krümmungsradius der konvex gekrümmten Gewindeflanke im Bereich von 60% bis 100%, insbesondere 60% bis 63% oder 80% bis 100%, des Außendurchmessers des Gewindes der Schraube liegt.

In weiterer Ausgestaltung der Erfindung kann vorgesehen sein, dass das Verhältnis des Außendurchmessers des Gewindes der Schraube zu dem Kerndurchmesser der Schraube bei etwa 1,5, insbesondere zwischen 1,45 und 1,7, liegt.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Einzelmerkmale der unterschiedlichen Ausführungsformen lassen sich dabei in beliebiger Weise kombinieren.

Hierbei zeigen:
- Figur 1: eine Seitenansicht einer von der Erfindung vorgeschlagenen, als Spanplattenschraube ausgebildeten Schraube gemäß einer ersten Ausführungsform;
- Figur 2: einen stark vergrößerten Ausschnitt A aus der Figur 1 mit einem Längsschnitt der Schraube;
- Figur 3: eine Seitenansicht eines von der Erfindung vorgeschlagenen als Spanplattenschraube ausgebildeten Schraube gemäß einer zweiten Ausführungsform;
- Figur 4: einen stark vergrößerten Ausschnitt A aus der Figur 3 mit einem Längsschnitt der Schraube.

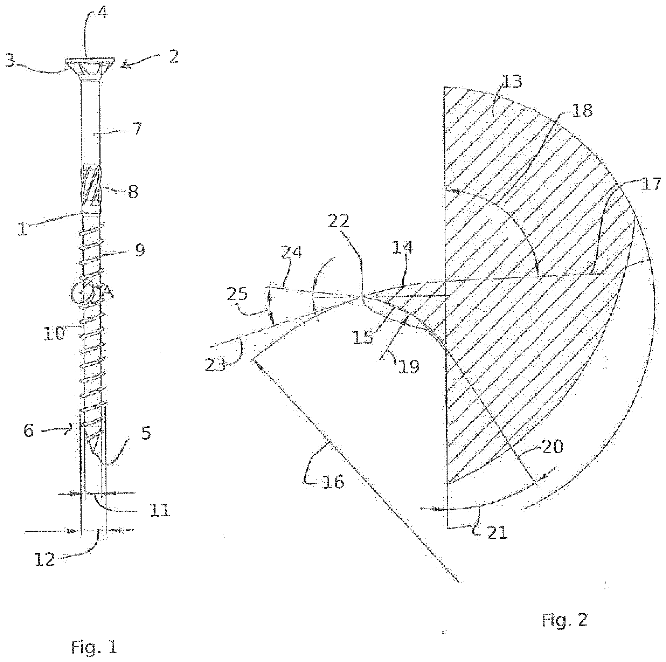

Die Figur 1 zeigt eine Seitenansicht einer Spanplattenschraube. Die Spanplattenschraube enthält einen Schraubenkörper bzw. Schraubenschaft 1, an dessen einen Ende 2 einen Schraubenkopf 3 ausgebildet ist. Es handelt sich um einen Senkkopf. In der ebenen Stirnfläche 4 des Schraubenkopfs 3 ist eine in der Figur nicht sichtbar Schraubenantriebsvertiefung angeordnet, mit deren Hilfe die Schraube verdreht werden kann. Der Schraubenkörper 1 bildet an seinem, dem Schraubenkopf 3 abgewandte vordere Enden 6 eine Schraubenspitze 5, bei der es sich um eine Bohrspitze handelt.

Von dem Schraubenkopf 3 ausgehend weist der Schraubenkörper 1 zunächst einen glatten Schaftabschnitt 7 auf, der also gewindefrei ausgebildet ist. Daran schließt sich ein Fräsabschnitt 8 an, bei dem eine Reihe von sehr steil verlaufenden Rippen angeordnet ist, die das Einschrauben der Schraube in faseriges Material erleichtern sollen. Ein solcher Fräsabschnitt 8 kann, wie dargestellt, bei einer Teilgewindeschraube, aber auch bei einer Vollgewindeschraube vorgesehen sein.

Über den restlichen Teil des Schraubenkörpers erstreckt sich ein Gewinde 9, das bis zu der Schraubenspitze 5 reicht. Die Gewindegänge des Gewindes 9 haben einen in axialer Richtung gemessenen Abstand voneinander, so dass zwischen den Gewindegängen die Außenkontur 10 des Schraubenkörpers 1 stehen bleibt.

Die Schraube hat einen Kerndurchmesser 11 und einen Außendurchmesser 12 des Gewindes, der beispielsweise um 50% größer ist als der Kerndurchmesser 11.

Die Profilform des Gewindes ist in der Figur 2 genauer dargestellt, die einen Ausschnitt aus der Figur 1 enthält. Die Figur 2 zeigt also einen Längsschnitt durch die Schraube, wobei der Kern 13 rechts und das Gewindeprofil links dargestellt ist. Die in Figur 2 nach oben gerichtete Gewindeflanke 14 ist also diejenige Gewindeflanke, die dem Schraubenkopf 3 zugewandt ist, während die untere Gewindeflanke 15 dem vorderen Schraubenende 6 mit der Schraubenspitze 5 zugewandt ist.

Die in diesem Längsschnitt durch die Schraube verlaufende Kontur der Gewindeflanke 14 liegt auf einem Kreisbogen mit einem Radius 16. Sie geht in die Außenkontur 10 des Schraubenkerns 13 in einem Winkel gegenüber, der etwas größer ist als ein rechter Winkel. Die Tangente 17 an die konvex gekrümmte obere Gewindeflanke 14 schließt mit der Außenkontur 10 der Schraube einen Winkel 18 von knapp unter 90° ein.

Die Kontur der dem vorderen Schraubenende 6 zugewandten Gewindeflanke 15 liegt ebenfalls auf einem Kreisbogen mit einem Radius 19.

Eine Tangente 20 an die konkav gekrümmte Gewindeflanke 15 an der Stelle des Übergangs in die Außenkontur 10 schließt mit dieser Außenkontur 10 einen Winkel 21 ein. Dieser Winkel 21 liegt in einem Bereich von etwa 30 bis 33 Winkelgrad.

Dadurch geht die gekrümmte Gewindeflanke 15 in einem stumpfen Winkel in die Außenkontur 10 der Schraube über, bei der dargestellten Ausführungsform beträgt der Winkel 147 bis 150 Winkelgrad.

Der Radius 16 der Krümmung der Kontur der konvex gekrümmten Gewindeflanke 14 liegt bei der dargestellten Ausführungsform bei einem Wert von etwa 92% des Kerndurchmessers 11 oder bei einem Wert von etwa 61% des Außendurchmessers 12 des Gewindes der Schraube.

Der Krümmungsradius 19 der Kontur der konkav gekrümmten Gewindeflanke 15 liegt bei einem Wert von etwa 35% des Kerndurchmessers 11 bzw. bei einem Wert von etwa 23% des Außendurchmessers 12 des Gewindes der Schraube.

Die beiden Gewindeflanken 14, 15 treffen sich zur Bildung einer Gewindekante 22. Die Tangente 23 an die dem Schraubenkopf zugewandte Gewindeflanke 14 und die Tangente 24 an die dem vorderen Schraubenende 6 zugewandte Gewindeflanke 15 bilden an der Gewindekante einen Winkel 25, der etwa bei 25° liegt. Aus produktionstechnischen Gründen kann an Stelle der Gewindekante 22 auch eine schmale Abplattungsfläche vorgesehen sein, so dass die Gewindekante 22 dann durch zwei parallel zur Gewindekante 22 verlaufende Seitenkanten und die dazwischen verlaufende schmale Abplattungsfläche ersetzt ist.

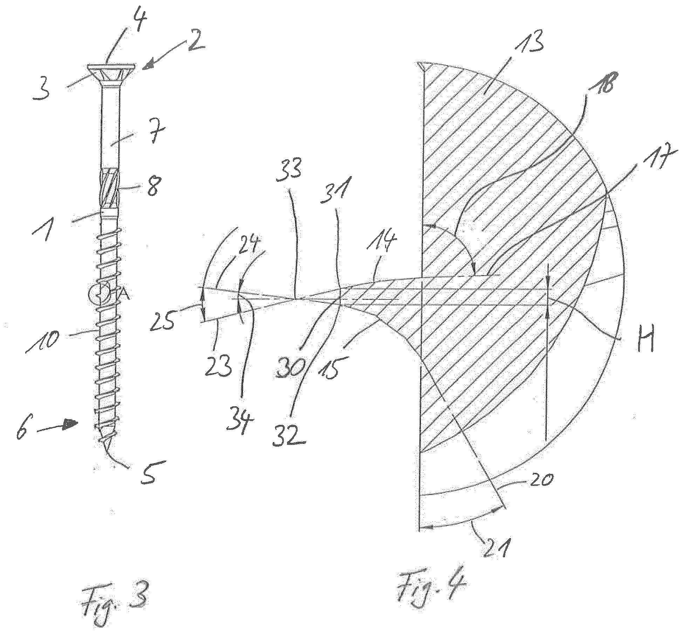

Die Figur 3 zeigt eine weitere erfindungsgemäße Ausführungsform einer Schraube 30, die annähernd identisch zu der Schraube der Fig. 1 und 2 aufgebaut ist, so dass lediglich die in Fig. 4 erkennbaren Unterschiede nachfolgend erläutert werden.

Die Fig. 4 zeigt eine Schnittansicht der Einzelheit A der Fig. 3. Wie zu erkennen ist, treffen sich die konvexe Gewindeflanke 14 und die konkave Gewindeflanke 15 nicht in einer gemeinsamen Gewindekante 22, wie bei der Schraube gemäß Fig. 1 und Fig. 2, sondern die Gewindeflanken 14, 15 enden an einer gemeinsamen Abplattungsfläche 30, die etwa parallel zur Mittellängsachse der Schraube verläuft. Die Abplattungsfläche 30 kann aus produktionstechnischen Gründen vorgesehen sein. Die dem Schraubenantriebsende zugewandte konvexe Gewindeflanke 14 endet somit an einer Kante 31, die gleichzeitig eine Seitenkante der Abplattungsfläche 30 bildet. Die der Schraubenspitze zugewandte konkave Gewindeflanke 15 endet an einer Kante 32, die gleichzeitig eine weitere Seitenkante der Abplattungsfläche 30 bildet. Die Kanten 31, 32 laufen parallel zueinander und schließen zwischen sich die Abplattungsfläche 30 ein. Die Abplattungsfläche 30 sowie ihre Seitenkanten 31, 32 verlaufen parallel zu einer gedachten Gewindekante 33, die radial außerhalb der Abplattungsfläche 30 verläuft und in der sich die Tangenten 23, 24 an die Gewindeflanken 14, 15 in ihren jeweiligen Kanten 31, 32 treffen. In der gedachten Gewindekante 33 treffen sich die Tangenten 23, 24 in einem Winkel von 20 bis 25 Winkelgrad, bei der Ausführungsform der Fig. 4 in einem Winkel von etwa 21°.

Ein Winkel 34, den die Tangente an die der Schraubenspitze zugewandte konkave Gewindeflanke 15 angelegte Tangente 24 mit einer durch die gedachte Gewindekante 33 verlaufenden Senkrechten auf die Mittellängsachse der Schraubenlängsachse einschließt beträgt bei der dargestellten Ausführungsform etwa 7°.

Eine Höhe H der Abplattungsfläche 30 beträgt bei der dargestellten Ausführungsform etwa 0,2 mm.

## Patentansprüche

1. Schraube, mit
- einem im Wesentlichen zylindrischen Schraubenkörper (1),
- der sich von einem Schraubenantriebsende (2) bis zu einem vorderen Schraubenende (6) erstreckt, sowie mit
- einem sich über mindestens einen Teil des Schraubenkörpers (1) bis zum vorderen Schraubenende (6) erstreckenden Schraubengewinde (9),
- dessen dem Schraubenantriebsende (2) zugewandte Gewindeflanke (14) konvex gewölbt ist und
- dessen dem Schraubenantriebsende (2) abgewandte Gewindeflanke (15) konkav gewölbt ist,
**dadurch gekennzeichnet, dass**
- die dem Schraubenantriebsende (2) zugewandte Gewindeflanke (14) etwa rechtwinklig oder alternativ in einem Winkel zwischen 85 Winkelgrad und 90 Winkelgrad in den Schraubenschaft (13) übergeht und
- beide Gewindeflanken (14, 15) sich an der Gewindekante (22) unter einem Winkel (25) von 20 Winkelgrad bis 25 Winkelgrad, insbesondere 25 Winkelgrad, treffen oder
- an einer Abplattungsfläche (30) enden und sich Tangenten (23, 24) an die beiden Gewindeflanken (14, 15) in einer gedachten Gewindekante (33) radial außerhalb der Abplattungsfläche (30) unter einem Winkel zwischen 20 Winkelgrad und 25 Winkelgrad, insbesondere 21 Winkelgrad, treffen.

2. Schraube nach Anspruch 1, bei dem die dem Schraubenantriebsende (2) abgewandte Gewindeflanke (15) stumpfwinklig in den Schraubenschaft (13) übergeht.

3. Schraube nach einem der vorhergehenden Ansprüche, bei der die Wölbung der dem Schraubenantriebsende (2) zugewandten Gewindeflanke (14) und/oder der dem Schraubenantriebsende (2) abgewandten Gewindeflanke (15) einem Kreisbogen, einer Parabel oder einer Aneinanderreihung geradlinger Strecken, die einer gekrümmten Kurve folgen, entspricht.

4. Schraube nach einem der vorhergehenden Ansprüche, bei der der Krümmungsradius (19) der dem vorderen Schraubenende (6) zugewandten Gewindeflanke (15) zwischen 30% und 50%, insbesondere 36% und 46%, des Kerndurchmessers (11) der Schraube und/oder zwischen 20% und 30%, insbesondere 23% und 28%, des Außendurchmessers (12) des Gewindes (9) der Schraube beträgt.

5. Schraube nach einem der vorhergehenden Ansprüche, bei der der Krümmungsradius (16) der dem Schraubenantriebsende (2) zugewandten Gewindeflanke (14) zwischen 90% und 170%, insbesondere 130% und 165% oder 90% und 95% des Kerndurchmessers (11) und/oder zwischen 60% und 100%, insbesondere 60% bis 63% oder 90% bis 100%, des Außendurchmessers (12) des Gewindes (9) der Schraube beträgt.

6. Schraube nach einem der vorhergehenden Ansprüche, bei der das Verhältnis von Außendurchmesser (12) des Gewindes (9) zu Kerndurchmesser der Schraube bei etwa 1,5, insbesondere zwischen 1,45 und 1,7, liegt.

## Claims

1. Screw, comprising
- an essentially cylindrical screw body (1) which
- extends from a screw drive end (2) up to a front screw end (6), and comprising
- a screw thread (9) extending at least over part of the screw body (1) up to the front screw end (6),
- with a thread flank (14) thereof facing towards the screw drive end (2) having a convex curvature, and
- with a thread flank (15) thereof facing away from the screw drive end (2) having a concave curvature,
**characterized in that**
- the thread flank (14) facing towards the screw drive end (2) merges into the screw shank (13) approximately at right angles or, as an alternative, at an angle between 85 degrees of angle and 90 degrees of angle, and
- both the thread flanks (14, 15) meet on the thread edge (22) at an angle (25) of 20 degrees of angle to 25 degrees of angle, in particular 25 degrees of angle, or
- end on a flattening surface (30) and tangents (23, 24) on the two thread flanks (14, 15) meet on an imaginary thread edge (33) radially outside the flattening surface (30) at an angle between 20 degrees of angle and 25 degrees of angle, in particular 21 degrees of angle.

2. Screw according to claim 1, wherein the thread flank (15) facing away from the screw drive end (2) merges into the screw shank (13) at an obtuse angle.

3. Screw according to any of the preceding claims, wherein the curvature of the thread flank (14) facing towards the screw drive end (2) and/or of the thread flank (15) facing away from the screw drive end (2) corresponds to a circular arc, a parabola or a sequence of straight lines following a bent curve.

4. Screw according to any of the preceding claims, wherein the radius of curvature (19) of the thread flank (15) facing towards the front screw end (6) is between 30% and 50%, in particular 36% and 46%, of the core diameter (11) of the screw and/or between 20% and 30%, in particular 23% and 28%, of the outer diameter (12) of the thread (9) of the screw.

5. Screw according to any of the preceding claims, wherein the radius of curvature (16) of the thread flank (14) facing towards the screw drive end (2) is between 90% and 170%, in particular 130% and 165%, or 90% and 95%, of the core diameter (11) and/or between 60% and 100%, in particular 60% to 63%, or 90% to 100%, of the outer diameter (12) of the thread (9) of the screw.

6. Screw according to any of the preceding claims, wherein the ratio of outer diameter (12) of the thread (9) to core diameter of the screw is approximately 1.5, in particular between 1.45 and 1.7.

## Revendications

1. Vis, comprenant
- un corps de vis essentiellement cylindrique (1),
- qui s'étend depuis une extrémité d'entraînement de vis (2) jusqu'à une extrémité avant de vis (6), et comprenant
- un filet de vis (9) s'étendant sur au moins une partie du corps de vis (1) jusqu'à l'extrémité avant de vis (6),
- dont le flanc de filet (14) tourné vers l'extrémité d'entraînement de vis (2) présente une courbure convexe et
- dont le flanc de filet (15) opposé à l'extrémité d'entraînement de vis (2) présente une courbure concave,
**caractérisée en ce que**
- le flanc de filet (14) tourné vers l'extrémité d'entraînement de vis (2) se prolonge approximativement à angle droit ou en variante suivant un angle compris entre 85° et 90° dans la tige de vis (13) et
- les deux flancs de filet (14, 15) se rejoignent au niveau de l'arête de filet (22) en formant un angle (25) de 20° à 25°, en particulier de 25°, ou
- se terminent au niveau d'une surface aplatie (30) et des tangentes (23, 24) aux deux flancs de filet (14, 15) se rejoignent dans une arête de filet imaginaire (33) radialement à l'extérieur de la surface aplatie (30) en formant un angle compris entre 20° et 25°, en particulier de 21°.

2. Vis selon la revendication 1, dans laquelle le flanc de filet (15) opposé à l'extrémité d'entraînement de vis (2) se prolonge suivant un angle obtus dans la tige de vis (13).

3. Vis selon l'une quelconque des revendications précédentes, dans laquelle la courbure du flanc de filet (14) tourné vers l'extrémité d'entraînement de vis (2) et/ou du flanc de filet (15) opposé à l'extrémité d'entraînement de vis (2) correspond à un arc de cercle, à une parabole ou à une série de sections rectilignes qui suivent une allure courbe.

4. Vis selon l'une quelconque des revendications précédentes, dans laquelle le rayon de courbure (19) du flanc de filet (15) tourné vers l'extrémité avant de vis (6) vaut entre 30 % et 50 %, en particulier entre 36 % et 46 %, du diamètre de noyau (11) de la vis et/ou entre 20 % et 30 %, en particulier entre 23 % et 28 % du diamètre extérieur (12) du filet (9) de la vis.

5. Vis selon l'une quelconque des revendications précédentes, dans laquelle le rayon de courbure (16) du flanc de filet (14) tourné vers l'extrémité d'entraînement de vis (2) vaut entre 90 % et 170 %, en particulier entre 130 % et 165 % ou entre 90 % et 95 % du diamètre de noyau (11) et/ou entre 60 % et 100 %, en particulier entre 60 % et 63 % ou entre 90 % et 100 %, du diamètre extérieur (12) du filet (9) de la vis.

6. Vis selon l'une quelconque des revendications précédentes, dans laquelle le rapport du diamètre extérieur (12) du filet (9) au diamètre de noyau de la vis vaut environ 1,5, en particulier est compris entre 1,45 et 1,7.
